# EUROPEAN PATENT SPECIFICATION

(11) **EP 0 389 287 B1**
(45) Date of publication and mention of the grant of the patent: **12.01.1994**
(21) Application number: 90303110.2
(22) Date of filing: 22.03.1990
(51) Int. Cl.: B29C 45/64

(54) **Improvements in or relating to production machinery**
Fertigungsmaschine
Machine de production

(30) Priority: 23.03.1989 NZ 228470
(43) Date of publication of application: 26.09.1990
(73) Proprietor: FISHER & PAYKEL LIMITED, Mount Wellington Auckland (NZ)
(72) Inventor: Hunter, Gorden Sharpe, Auckland (NZ)
(74) Representative: Brown, John David

(56) References cited:
- EP-A- 0 241 305
- DE-A- 2 631 806
- DE-A- 2 940 114

## Description

This invention relates to production machinery and has been devised particularly though not solely for use in handling moulds used in injection moulding machines.

Production machinery for manipulating moulds is disclosed in EP241305. Such machinery has at least one mould manipulating portion which is capable of being rotatably displaced in a horizontal plane between two orientations, a closed orientation for use of the mould and an open orientation for access to the mould.

It is an object of the present invention to provide production machinery which will at least provide the public with a useful choice.

Accordingly the invention consists in production machinery including article manipulating apparatus comprising:
a base frame having a horizontal longitudinal main plane and a transverse axis; and
at least one article manipulating means to enable an article supported thereon to be moved from a first orientation to a second orientation,
characterised in that said at least one article manipulating means comprises a transverse mounting plate mounted on said base frame in a plane at a selected angle to said horizontal plane, a slewing means rotatably mounted on said mounting plate, and a first article attaching means on said slewing means for rotation therewith and having an article attaching surface thereon for attaching an article thereto at a further angle to said mounting plate;
so that rotation of said slewing means rotates said article attaching surface and article fixed thereto causing said article attaching surface to be movable from said first orientation in which said article attaching surface is in one plane relative to said main plane to said second orientation in which said article attaching surface is in a different plane relative to said main plane.

The invention also envisages constructions of which the following gives examples only.

To those skilled in the art to which the invention relates, many changes in construction and widely differing embodiments and applications of the invention will suggest themselves without departing from the scope of the invention as defined in the appended claims. The disclosures and the descriptions herein are purely illustrative and are not intended to be in any sense limiting.

One preferred form of the invention will now be described with reference to the accompanying drawings in which;
Figure 1 is a perspective sketch of a production machine in the form of a mould manipulating machine constructed accordingly to the invention and
Figure 2 is a diagramatic cross-section of the machine shown in Figure 1.

Referring to the drawings, production machinery in the form of a article manipulating machine the article being two parts of a plastics injection mould is provided as follows.

A base frame 1 is provided and on the base frame there are provided one and preferably two mould manipulating devices. One such device generally referenced 2 may be fixed to the base and the other device generally referenced 3 is mounted on carriages or runners 4 which enable the device 3 to be moveable on tracks 5 on the base frame 1. The device 3 is preferably moveable by hydraulic means (not shown) and runs with wheels or rollers (not shown) operating on the tracks 5.

Each device 2 and 3 has a mounting plate 6 arranged at an angle of preferably 45° to the plan of the tracks 5 and mounted on each of these plates 6 and parallel thereto is a slewing ring 7 on which is mounted a mould attaching means 8 having a mould part attaching face 9. It is envisaged that the mould attaching means will enable moulds of a weight of for example 15 tonnes to be handled and accordingly the mould attaching means 8 are reinforced with suitable reinforcings 10 or otherwise made structurally strong enough to support the mould parts.

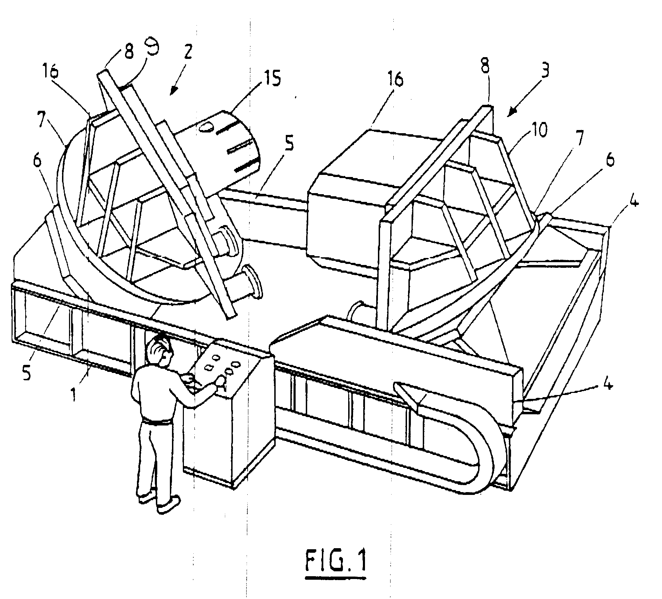

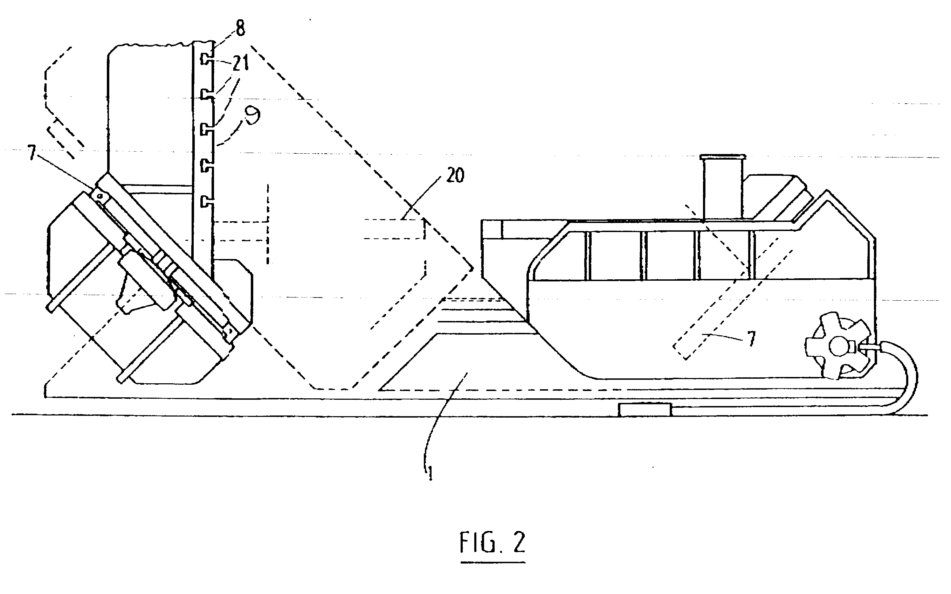

In Figure 1 an internal plastics injection mould part 15 is shown which fits within an external plastics injection mould part 16 in the known way. The slewing rings 7 are arranged to be rotated by any suitable means such as an electric or hydraulic motor (not shown) and operate to rotate the mould parts 15 and 16. For example in Figure 1, the mould part 16 is shown in its working disposition whereas the mould part 15 is shown partly slewed between its working position and an operating position shown in pecked lines at 20 in Figure 2.

In use the production machine above described is placed along side an injection moulding machine and the mould parts 15 and 16 in the assembled disposition are detached from the injection moulding machine, moved on a conveyor or roller system (not shown) to a point in where the respective parts may be fixed e.g. using bolts and the Tee Slots 21 (Figure 2) to the mould part attachment faces 9, which are arranged in the vertical disposition. The moveable device 3 and its mounted mould part are then moved by appropriate hydraulic means to separate the mould parts. Each device may then be rotated on its slewing ring 7 until the face 9 thereof is in a horizontal disposition, the slewing ring 7 having been rotated through 180°. Thus by rotating the slewing rings 7 each of the mould part attachment faces 9 of the mould attachment means 8 are moved from a vertical disposition, as shown in Figure 1 at the right hand end and Figure 2 at the left hand end, to a horizontal disposition in which the mould part attachment faces 9 of the mould attaching means 8 are substantially horizontal. With the mould parts 15 and 16 in this position such parts are at a convenience working level to enable cleaning, repair and other work to be carried out on the mould parts in a convenient maintenance disposition.

The apparatus may be used as a further example, in foundries for the handling of casting equipment such as moulding flasks, core boxes, pattern plates and other equipment requiring exposure separately and assembly together in different dispositions.

From the foregoing it will be seen that a simple but robust piece of machinery is provided which will enable mould parts to be bolted to the mould attachment means with mould parts still in the assembled disposition the moveable member then moved to separate the mould parts, then turned on the slewing rings one at a time to convert the mould parts from a working position to a position where operations may be readily carried out thereon. The advantages of this are therefore considerable.

## Claims

1. Production machinery including article manipulating apparatus comprising:
a base frame (1) having a horizontal longitudinal main plane and a transverse axis; and
at least one article manipulating means (2, 3) to enable an article supported thereon to be moved from a first orientation to a second orientation,
characterised in that said at least one article manipulating means comprises a transverse mounting plate (6) mounted on said base frame (1) in a plane at a selected angle to said horizontal plane, a slewing means (7) rotatably mounted on said mounting plate (6), and a first article attaching means (8) on said slewing means (7) for rotation therewith and having an article attaching surface (9) thereon for attaching an article thereto at a further angle to said mounting plate;
so that rotation of said slewing means (7) rotates said article attaching surface (9) and article fixed thereto causing said article attaching surface (9) to be movable from said first orientation in which said article attaching surface is in one plane relative to said main plane to said second orientation in which said article attaching surface is in a different plane relative to said main plane.

2. Production machinery as claimed in Claim 1 wherein:
said article comprises a plastics injection mould (15, 16).

3. Production machinery as claimed in Claim 1 or Claim 2 wherein:
a pair of article manipulating means (2, 3) is provided, one of said pair being translatably movable relative to the other of said pair to provide clearance between articles attached to respective articles attaching surfaces (9) of said pair during article manipulation.

4. Production machinery as claimed in any one of the preceding claims wherein:
said mounting plate (6) is arranged as a selected angle so that an article mounted on said article attaching surface (9) is rotatable through at least 90° of angular movement relative to said main plane.

5. Production machinery as claimed in Claim 4 wherein:
said slewing means (7) and article attaching surface (9) are arranged at an angle of substantially 45° with respect to each other.

## Patentansprüche

1. Fertigungsmaschine mit einer Handhabungsvorrichtung für Artikel, mit einem Grundrahmen (1), der eine horizontale, in Längsrichtung verlaufende Hauptebene und eine Querachse aufweist, und mit wenigstens einem Mittel (2, 3) zur Handhabung von Gegenständen, um zu ermöglichen, daß ein dadurch getragener Gegenstand aus einer ersten Orientierung in eine zweite Orientierung bewegt wird, dadurch gekennzeichnet, daß wenigstens ein Mittel zur Handhabung von Gegenständen eine quer verlaufende Befestigungsplatte (6) umfaßt, die auf dem besagten Grundrahmen (1) in einer Ebene gehalten ist, die unter einem ausgewählten Winkel zu der besagten horizontalen Ebene verläuft, ein Nachführmittel (7), das drehbar auf der besagten Befestigungsplatte (6) gehalten ist, und ein erstes Befestigungsmittel (8) für Gegenstände auf dem besagten Nachführmittel (7) zur Drehung damit, welches eine Befestigungsfläche (7) für Gegenstände darauf aufweist, um einen Gegenstand unter einem weiteren Winkel zu der besagten Befestigungsplatte daran zu befestigen, so daß eine Drehung des besagten Nachführmittels (7) die besagte Befestigungsfläche (9) für Gegenstände sowie einen daran befestigten Gegenstand dreht, wodurch die besagte Befestigungsfläche (8) für Gegenstände aus der besagten ersten Orientierung, in der sich die besagte Befestigungsfläche für Gegenstände in einer Ebene in Bezug auf die besagte Hauptebene befindet, in die besagte zweite Orientierung, in der sich die besagten Befestigungsfläche für Gegenstände in einer anderen Ebene in Bezug auf die besagte Hauptebene befindet, bewegbar ist.

2. Fertigungsmaschine nach Anspruch 1, dadurch gekennzeichnet, daß der besagte Gegenstand eine Kunststoff-Spritzgußform (15, 16) einschließt.

3. Fertigungsmaschine nach Anspruch 1 oder 2, gekennzeichnet durch ein Paar Handhabungsmittel (2, 3) für Gegenstände, wobei eines davon translatorisch relativ zum anderen bewegbar ist, um einen Abstand zwischen Gegenständen zu schaffen, die an jeweiligen Befestigungsflächen (9) für Gegenstände des besagten Paars während der Handhabung der Gegenstände zu schaffen.

4. Fertigungsmaschine nach einem der vorangehenden Ansprüche, dadurch gekennzeichnet, daß die besagte Befestigungsplatte (6) unter einem ausgewählten Winkel angeordnet ist, so daß ein Gegenstand, der auf der besagte Befestigungsfläche (9) für Gegenstände gehalten ist, über eine Winkelbewegung von wenigstens 90° relativ zu der besagten Hauptebene drehbar ist.

5. Fertigungsmaschine nach Anspruch 4, dadurch gekennzeichnet, daß das besagte Nachführmittel (7) und die Befestigungsfläche (9) für Gegenstände unter einem Winkel von im wesentlichen 45° in Bezug zueinander angeordnet sind.

## Revendications

1. Machine de production incluant des appareils de manipulation d'articles comprenant :
un châssis (1) de base comprenant un plan principal horizontal longitudinal et un axe transversal ; et
au moins un moyen (2, 3) de manipulation d'articles permettant de déplacer un article qui y est supporté à partir d'une première orientation jusqu'à une seconde orientation,
caractérisée en ce que l'un au moins des moyens de manipulation d'articles comprend une plaque (6) de montage transversale montée sur ledit châssis (1) de base dans un plan présentant un angle choisi par rapport au plan horizontal, des moyens de pivotement (7) montés rotatifs sur ladite plaque (6) de montage, et un premier moyen (8) de fixation des articles sur lesdits moyens (7) de pivotement pour leur rotation avec ces derniers et présentant une surface (9) de fixation d'article sur cette dernière, pour y fixer un article à un angle supérieur à ladite plaque de montage ;
de sorte que la rotation desdits moyens (7) de pivotement entraîne en rotation ladite surface (9) de fixation d'articles et l'article qui y est fixé, ce qui a pour effet de rendre ladite surface (9) de fixation d'article mobile à partir de ladite première orientation pour laquelle ladite surface de fixation d'article est située dans un plan relatif audit plan principal, jusqu'à ladite seconde orientation dans laquelle ladite surface de fixation d'article est située dans un plan différent par rapport audit plan principal.

2. Machine de production selon la revendication 1, caractérisée en ce que ledit article comprend un moule (15, 16) en plastique injecté.

3. Machine de production selon la revendication 1 ou 2, caractérisée en ce qu'elle est pourvue d'une paire de moyens (2, 3) de manipulation d'articles, l'un étant mobile en translation par rapport à l'autre de manière à provoquer un dégagement entre les articles fixés aux surfaces (9) respectives de fixation d'articles de ladite paire pendant la manipulation d'articles.

4. Machine de production selon l'une quelconque des revendications précédentes, caractérisée en ce que ladite plaque (6) de montage est disposée selon un angle sélectionné de sorte qu'un article monté sur ladite surface (9) de fixation d'articles, est mobile selon un mouvement angulaire d'au moins 90° par rapport audit plan principal.

5. Machine de production selon la revendication 4, caractérisée en ce que lesdits moyens (7) de pivotement et la surface (9) de fixation d'article sont disposés selon un angle sensiblement égal à 45° l'un par rapport à l'autre.
